# FASCICULE DE BREVET EUROPEEN

(11) **EP 0 796 696 B1**
(45) Date de publication et mention de la délivrance du brevet: **08.05.2002**
(21) Numéro de dépôt: 97400318.8
(22) Date de dépôt: 12.02.1997
(51) Int. Cl.: B23P 19/02, B25B 27/06, B25B 5/06, F22B 37/00

(54) **Procédé et dispositif d'extraction d'un tronçon de tube d'un échangeur de chaleur et utilisation du procédé et du dispositif**
Verfahren und Vorrichtung zum Herausziehen eines Rohrabschnittes aus einem Wärmetauscher und Anwendung des Verfahrens und der Vorrichtung
Method and device for withdrawing part of a tube from a heat exchanger and use of the method and the device

(30) Priorité: 19.03.1996 FR 9603408
(43) Date de publication de la demande: 24.09.1997
(73) Titulaire: FRAMATOME, 92400 Courbevoie (FR)
(72) Inventeur: Ferlay, Jean-Claude, 71880 Chatenoy le Royal (FR); Tetu, Jean, 71240 Saint Loup de Varennes (FR)
(74) Mandataire: Bouget, Lucien

(56) Documents cités:
- EP-A- 0 163 088
- EP-A- 0 186 489
- EP-A- 0 626 232
- DE-B- 1 171 837
- FR-A- 2 591 744
- FR-A- 2 671 499
- US-A- 5 138 754

## Description

L'invention concerne un procédé d'extraction d'un tronçon d'un tube d'un échangeur de chaleur serti à ses extrémités dans une plaque tubulaire. En particulier, l'invention s'applique à l'extraction d'un tronçon de tube d'un générateur de vapeur d'un réacteur nucléaire à eau sous pression, par exemple pour effectuer l'examen d'une zone de ce tube.

Les échangeurs de chaleur tel que les générateurs de vapeur des réacteurs nucléaires à eau sous pression comportent généralement une plaque tubulaire de grande épaisseur traversée par des tubes qui affleurent sur une face de la plaque tubulaire constituant'sa face d'entrée et qui sont saillants de l'autre côté de la plaque tubulaire dont la face de sortie délimite la partie secondaire du générateur de vapeur recevant l'eau d'alimentation à vaporiser. La face d'entrée de la plaque tubulaire constitue la paroi supérieure d'une boîte à eau en deux parties assurant la distribution et la récupération de l'eau sous pression circulant dans les tubes du faisceau du générateur de vapeur et transportant la chaleur qui est utilisée pour réaliser l'échauffement et la vaporisation de l'eau d'alimentation. Chacun des tubes du générateur de vapeur, cintré à sa partie supérieure, présente une première branche rectiligne ayant une extrémité débouchant dans une partie de la boîte à eau et une seconde branche rectiligne dont l'extrémité débouche dans l'autre partie de la boîte à eau.

Les tubes du générateur de vapeur constituant un faisceau sont sertis à l'intérieur de trous de diamètre approprié traversant la plaque tubulaire, pratiquement sur toute l'épaisseur de cette plaque. Le sertissage des tubes dans la plaque tubulaire consiste à laminer la paroi des tubes contre la paroi des trous de la plaque, si bien qu'il existe du côté de la face de sortie de la plaque tubulaire, dans la paroi de chacun des tubes, une zone de transition entre la partie déformée et la partie non déformée du tube.

La concentration des contraintes dans la zone de transition du tube est sensiblement plus forte que dans les autres parties du tube, si bien que le tube subit dans cette zone une corrosion locale accrue, aussi bien depuis sa surface interne en contact avec l'eau sous pression de refroidissement du réacteur nucléaire que depuis sa surface externe en contact avec l'eau d'alimentation.

Lorsqu'on effectue l'entretien des générateurs de vapeur d'un réacteur nucléaire, ce réacteur étant à l'arrêt, il est nécessaire d'effectuer des contrôles des tubes, en particulier pour déterminer leur tenue à la corrosion dans la zone de transition, après un certain temps de service. Ces contrôles peuvent nécessiter l'extraction d'une portion de tube entourant la zone de transition, en particulier dans le cas où des défauts ont été détectés dans la zone de transition.

Cette extraction n'a d'intérêt que si elle peut être réalisée sans déformation et sans modification de l'état du tube dans la zone à examiner.

En outre, la partie défectueuse du tube qui correspond le plus souvent à la zone de transition peut présenter des fissures, en particulier des fissures circonférentielles, si bien qu'il existe un risque important de rupture du tube pendant son extraction du générateur de vapeur. Dans certains cas, on doit même renoncer à l'extraction du tube du fait de l'importance des fissures.

Dans le FR-A-2.591.744 et dans le FR-A-2.638.014 déposés par la société FRAMATOME, on a proposé de fixer par collage, à l'intérieur du tube, un manchon recouvrant la zone fissurée. Le manchon doit être fixé à l'intérieur du tube, de part et d'autre de la zone fissurée et l'extraction du tube est réalisée par traction sur le manchon qui assure un pontage de la zone défectueuse du tube. On peut ainsi réaliser l'extraction d'un tronçon de tube sans exercer de contrainte dans la zone défectueuse du tube.

Cependant, il est apparu que les efforts de traction qui peuvent être exercés par l'intermédiaire de manchettes collées sont limités, ce qui interdit de réaliser certaines opérations de traction de tronçons de tube. En outre, cette technique est peu fiable en ce qui concerne le niveau de résistance des zones de jonction de la manchette. La mise en oeuvre de cette technique se traduit également par l'utilisation d'un matériel complexe et par des opérations de mise en place des manchettes d'extraction qui sont longues et délicates.

On a proposé suivant le préambule de la revendication 5, par exemple, dans le EP-A-0.186.489, d'utiliser des outillages d'extraction comportant, à l'extrémité d'une tige tubulaire, un manchon présentant des fentes longitudinales délimitant plusieurs doigts d'accrochage qui présentent une denture sur leur surface extérieure. Une tige présentant une extrémité élargie diamétralement comportant une surface d'actionnement est montée coulissante à l'intérieur de la tige tubulaire portant les doigts d'accrochage. La tige d'actionnement montée coulissante permet d'écarter les doigts d'accrochage de manière que les parties dentées des doigts viennent s'engager dans le métal de la paroi interne du tube. On exerce une traction sur la tige tubulaire de l'outil de manière à assurer l'arrachage et l'extraction du tube.

Un tel dispositif d'extraction présente des difficultés d'utilisation à l'intérieur d'une boîte à eau de générateur de vapeur, du fait de l'utilisation de tiges rigides de grande longueur pour assurer l'extraction du tube et la commande des griffes d'accrochage. En particulier, le dispositif est d'un usage très difficile pour extraire des tubes périphériques du faisceau du générateur de vapeur.

En outre, le dispositif d'extraction ne permet pas d'extraire un tronçon de tube présentant des fissures sans exercer de contraintes dommageables sur le tronçon de tube, de telle sorte qu'on ne peut utiliser le tronçon pour effectuer une expertise de défauts.

En fait, dans le cas de l'extraction d'un tronçon de tube présentant des fissures, il existe un très grand risque de rupture du tube, de sorte qu'on doit renoncer à effectuer l'extraction de tronçons de tube, dans de très nombreux cas.

Le but de l'invention est donc de proposer un procédé d'extraction d'un tronçon d'un tube d'un échangeur de chaleur serti à ses extrémités dans une plaque tubulaire, dans lequel :
- on introduit dans le tube, par l'une de ses extrémités, une manchette de liaison comportant une enveloppe métallique tubulaire déformable ayant au moins une zone dentée d'agrippage et des moyens de dilatation radiale de l'enveloppe déformable ;
- on déplace la manchette de liaison dans le tube jusqu'à sa mise en place dans le tronçon de tube à extraire ;
- on dilate l'enveloppe déformable de la manchette de liaison, de manière à mettre la zone dentée de l'enveloppe déformable en contact avec pression contre la surface intérieure du tube ; et
on exerce une traction sur le tronçon du tube dans lequel est fixée la manchette de liaison pour réaliser son extraction de la plaque tubulaire de l'échangeur de chaleur,
ce procédé pouvant être mis en oeuvre pour réaliser l'extraction de tubes situés dans une zone quelconque du faisceau du générateur de vapeur et permettant d'extraire des tronçons de tube présentant des défauts tels que des fissures, sans exercer de contraintes importantes sur le tronçon pendant son extraction.

Dans ce but, l'enveloppe métallique déformable est une enveloppe souple, les moyens de dilatations radiale de l'enveloppe souple sont des moyens de gonflage alimentés par un conduit en fluide sous pression, la manchette de liaison étant fixée à l'extrémité du conduit d'alimentation en fluide sous pression, avec interposition d'un clapet anti-retour, et on sépare le conduit de la manchette de liaison maintenue en position dans le tube, une pression de gonflage de la manchette de liaison étant maintenue, après séparation du conduit, lorsqu'on exerce la traction sur le tronçon de tube, grâce au clapet anti-retour.

Un autre but de l'invention est un dispositif d'extraction selon la revendication 5.

Afin de bien faire comprendre l'invention, on va maintenant décrire, à titre d'exemple non limitatif, la mise en oeuvre du procédé suivant l'invention pour l'extraction d'une portion de tube d'un générateur de vapeur et le dispositif utilisé comportant une manchette de liaison actionnée par un fluide sous pression.

La figure 1 représente une vue en coupe partielle par un plan vertical de la boîte à eau d'un générateur de vapeur et d'un tube dont on réalise l'extraction d'un tronçon par le procédé suivant l'invention.

Les figures 2 et 3 sont des vues en coupe schématiques montrant une manchette de liaison utilisée dans un procédé d'extraction suivant l'invention, en position à l'intérieur d'un tube du générateur de vapeur, au cours de deux phases du procédé d'extraction.

Les figures 3A et 3B sont des vues en coupe analogues aux figures 2 et 3 montrant deux phases ultérieures de l'opération d'extraction.

La figure 4 est une vue en coupe longitudinale d'une manchette de liaison utilisée pour la mise en oeuvre du procédé d'extraction suivant l'invention.

La figure 5 est une vue en coupe partielle schématique d'une partie de la boîte à eau d'un générateur de vapeur et d'un tube périphérique du faisceau du générateur de vapeur, pendant une phase d'extraction d'un tronçon de tube.

La figure 6 est une vue en coupe axiale d'une manchette de liaison utilisée pour l'extraction de tubes périphériques du générateur de vapeur.

La figure 7 est une vue en élévation et en coupe partielle d'une partie de la boîte à eau d'un générateur de vapeur montrant un dispositif d'extraction d'un tronçon de tube périphérique en position de travail.

La figure 8 est une vue en élévation et en coupe partielle d'un câble de traction du dispositif représenté sur la figure 7.

La figure 9 est une vue en coupe axiale d'un mandrin de traction du dispositif représenté sur la figure 7.

La figure 9A est une vue en coupe transversale suivant A-A de la figure 9.

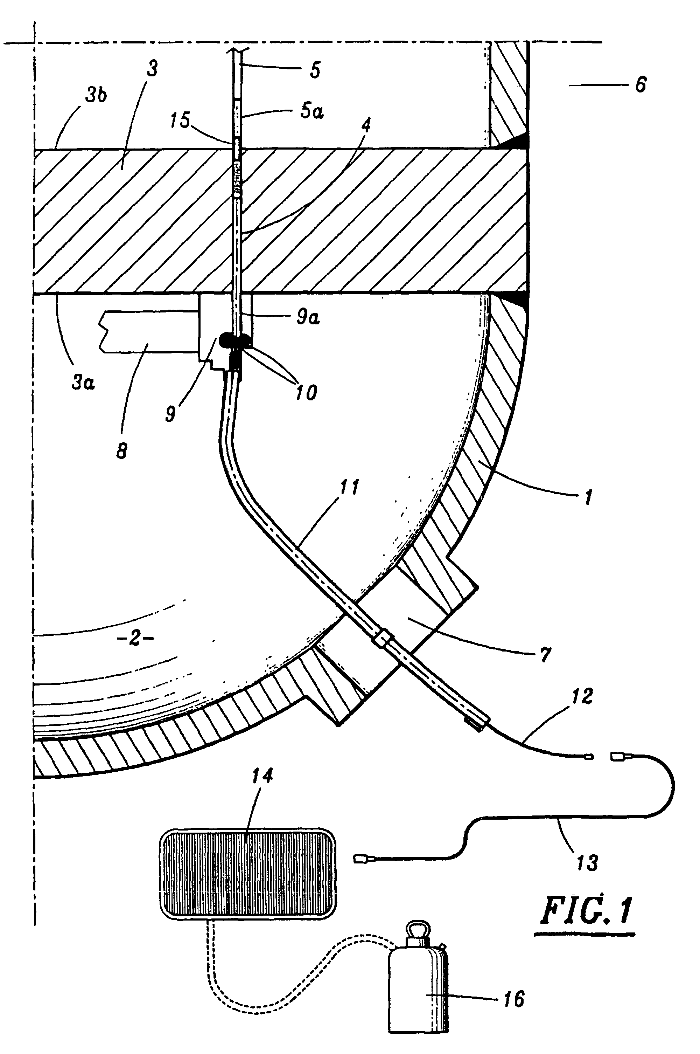

Sur la figure 1, on voit une partie de l'enveloppe hémisphérique 1 de la boîte à eau 2 d'un générateur de vapeur qui est délimitée à sa partie supérieure par une plaque tubulaire 3 de forte épaisseur traversée par des trous 4 dans chacun desquels est fixée l'extrémité d'un tube 5 du générateur de vapeur.

La plaque tubulaire 3 est fixée à sa partie inférieure sur la paroi 1 de la boîte à eau et à sa partie supérieure sur l'extrémité inférieure de l'enveloppe 6 du générateur de vapeur à l'intérieur de laquelle est disposé le faisceau des tubes 5.

Les tubes 5 du faisceau du générateur de vapeur sont cintrés de manière à présenter la forme d'un U qui comporte deux branches droites dont les parties d'extrémités sont fixées dans deux ouvertures 4 traversant la plaque tubulaire 3 et débouchant dans deux parties de la boîte à eau 2 séparées par une cloison.

Les parties d'extrémité des tubes 5 du faisceau fixées dans les ouvertures 4 de la plaque tubulaire 3 débouchent dans la boîte à eau 2, sur la face inférieure ou face d'entrée de la plaque tubulaire 3.

Les parties d'extrémité des tubes 5 sont fixées à l'intérieur des ouvertures 4, par dudgeonnage et par soudage. La paroi du tube 5 subit un laminage contre la paroi de l'ouverture 4 de la plaque tubulaire, dans sa partie dudgeonnée. La zone de transition 5a entre la partie du tube 5 déformée lors du dudgeonnage et la partie non déformée du tube située au-dessus de la face supérieure de la plaque tubulaire 3 présente une forte concentration de contraintes résiduelles internes et de ce fait le tube est plus sensible à la corrosion sous tension dans le réacteur en service, dans sa zone de transition. Il se forme donc des fissures, de manière beaucoup plus fréquente, dans la zone de transition 5a du tube située au voisinage de la face de sortie 3b de la plaque tubulaire 3.

Dans le cas où l'on a repéré, pendant une période d'arrêt du réacteur nucléaire, une fissure dans la paroi d'un tube 5, par exemple par une opération de contrôle par courants de Foucault, il peut être intéressant d'extraire un tronçon du tube dans lequel se trouve la zone fissurée, pour en réaliser l'expertise métallurgique.

Bien entendu, l'expertise du tronçon de tube ne pourra apporter des enseignements utilisables que si le tronçon de tube comportant la zone fissurée est extrait du générateur de vapeur sans soumettre le tronçon de tube à des contraintes importantes qui risqueraient de modifier la structure de la zone fissurée et éventuellement de provoquer une rupture avant la fin de l'extraction du tronçon de tube.

La mise en oeuvre du procédé d'extraction suivant l'invention qui sera décrite ci-après permet de réaliser l'extraction d'un tronçon de tube dans de bonnes conditions, de telle manière qu'une expertise significative du tronçon de tube puisse être effectuée après son extraction.

Sur la figure 1, on a représenté une partie de la paroi 1 de la boîte à eau qui est traversée par une ouverture 7 constituant un trou d'homme permettant d'accéder à l'un des compartiments de la boîte à eau.

Le procédé suivant l'invention est mis en oeuvre en introduisant des moyens d'extraction dans la boîte à eau et dans le tube 5, par le trou d'homme 7.

Le procédé d'extraction suivant l'invention est mis en oeuvre en utilisant des dispositifs de manutention connus et utilisés à l'intérieur des boîte à eau de générateurs de vapeur pour effectuer les opérations de contrôle ou de réparation à l'intérieur des tubes du faisceau, en utilisant des moyens de contrôle ou des outils introduits par l'extrémité des tubes débouchant dans la boîte à eau.

De tels dispositifs comportent un bras de manutention dont la partie d'extrémité 8 a été représentée sur la figure 1 et un tireur-pousseur à galets 9 fixé à l'extrémité du bras 8.

Le bras de manutention 8 peut être déplacé à l'intérieur de la boîte à eau, pour placer le tireur-pousseur 9 dans l'alignement axial d'un tube quelconque du faisceau. Dans sa position d'alignement axial avec un tube 5 du faisceau, le tireur-pousseur 9 qui comporte au moins un train de galets de poussée et de traction 10 permet de déplacer dans la direction axiale, dans un sens ou dans l'autre, un outil fixé à l'extrémité d'un élément souple allongé tel qu'un conduit ou un câble engagé dans un canal de guidage 9a du tireur-pousseur. Dans la position d'alignement axial du tireur-pousseur 9 et du tube 5, le canai 9a du tireur-pousseur se trouve dans le prolongement de l'axe du tube 5.

De plus, un conduit de guidage 11 est fixé à l'une de ses extrémités sur le tireur-pousseur, dans le prolongement du canal 9a et de l'espace de guidage entre les galets 10. Le conduit de guidage de forme courbe comporte une extrémité opposée au tireur-pousseur 9 traversant l'enveloppe 1 de la boîte à eau par le trou d'homme 7. De cette manière, on peut engager dans le conduit de guidage 11, depuis l'extérieur de la boîte à eau 2 du générateur de vapeur, un outillage fixé à l'extrémité d'un conduit souple tel que le conduit 12 représenté sur la figure 1.

Dans le cas où l'on a repéré la présence de fissures dans la zone de transition 5a du tube 5, on utilise le conduit de guidage 11 et le tireur-pousseur 9 pour introduire une manchette de liaison 15 qui sera décrite par la suite, à l'intérieur de la boîte à eau 2, puis à l'intérieur du tube 5, jusqu'à ce que la manchette de liaison 15 se trouve dans la zone de transition 5a dans laquelle le tube 5 présente des fissures.

La manchette de liaison fixée à l'extrémité d'un conduit souple 12 est introduite dans la partie d'entrée du conduit de guidage 11 puis poussée manuellement dans le conduit 12, depuis l'extérieur de la boîte à eau jusqu'au train de galets 10 des tireurs-pousseurs. Les galets du tireur-pousseur en prise avec le conduit 12 assurent alors le déplacement de la manchette de liaison 15 fixée à l'extrémité du conduit souple 12 dans la direction axiale, pour la faire pénétrer dans le tube 5 puis pour la mettre en place dans la zone 5a, comme représenté sur la figure 1.

L'extrémité du conduit souple 12 peut alors être reliée par l'intermédiaire d'un conduit souple intermédiaire 13, à une pompe 14 reliée à un réservoir de fluide d'actionnement sous pression de la manchette de liaison 15.

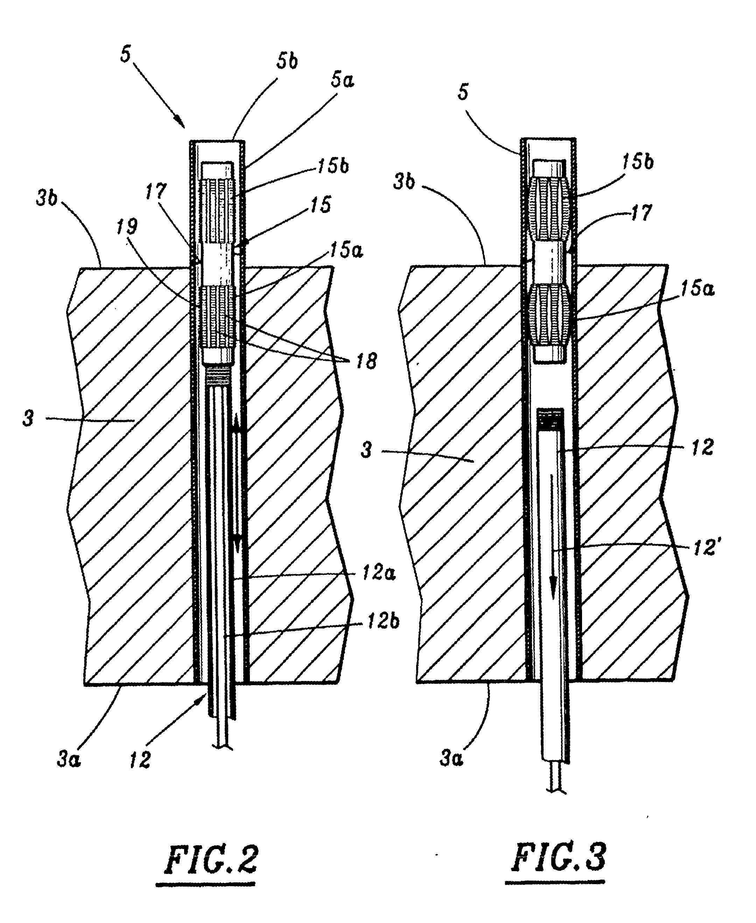

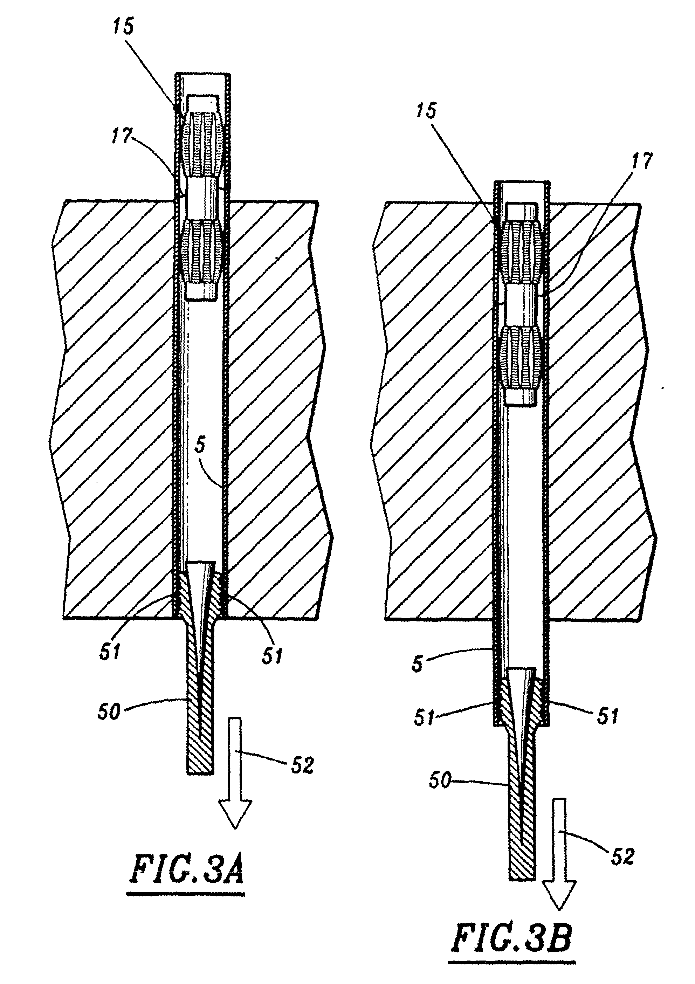

Sur la figure 2, on a représenté à plus grande échelle la zone de transition 5a du tube 5 dans laquelle le tube 5 présente une fissure circonférentielle 17 juste au-dessus de la face supérieure 3b de la plaque tubulaire 3.

Sur la figure 2, on a également représenté la manchette de liaison 15 fixée à l'extrémité du conduit souple 12, dans sa position de service à l'intérieur du tube, de manière à permettre l'extraction d'un tronçon du tube 5 comportant la zone traversée par la fissure circonférentielle 17.

Préalablement à l'introduction de la manchette de liaison 15 dans le tube 5, on sépare la partie inférieure du tube 5 constituant le tronçon à extraire de la partie supérieure du tube par une coupe 5b réalisée par l'intérieur du tube 5 en introduisant un outil de découpage dans le tube par la face d'entrée de la plaque tubulaire 3.

Le conduit souple 12 est réalisé de manière coaxiale et comporte une gaine externe 12a engagée en force sur une partie d'extrémité inférieure de la manchette de liaison 15 et une gaine hydraulique interne 12b engagée à son extrémité sur un embout d'alimentation de la manchette de liaison en fluide hydraulique sous pression, disposée de manière coaxiale à l'intérieur de la gaine externe 12a. Les galets 10 du train de galets du tireur-pousseur 9 viennent en prise avec la gaine externe 12a du conduit souple 12 pour assurer le déplacement de la manchette de liaison 15 à l'intérieur du tube 5.

La manchette de liaison 15 comporte une enveloppe métallique externe qui est déformable radialement dans deux zones d'accrochage 15a et 15b du fait qu'elle comporte des fentes longitudinales traversantes 18.

Entre deux fentes successives, l'enveloppe métallique souple de la manchette de liaison 15 comporte une denture 19 permettant l'accrochage de la partie correspondante de la manchette de liaison contre la surface intérieure du tube 5, par gonflage et expansion diamétrale de l'enveloppe souple.

Sur la figure 3, on a représenté l'enveloppe souple externe de la manchette de liaison 15 disposée dans la zone du tube traversée par la fissure 17, dans un état de gonflage et d'expansion diamétrale permettant de réaliser l'accrochage des zones d'accrochage 15a et 15b de l'enveloppe de la manchette de liaison 15 contre la surface intérieure du tube 5. La zone d'accrochage 15a de l'enveloppe de la manchette de liaison vient en prise avec la surface intérieure du tube 5 dans une zone située en-dessous de la fissure 17 alors que la zone d'accrochage supérieure 15b de la manchette de liaison 15 vient en prise avec la paroi intérieure du tube 5 dans une zone située au-dessus de la fissure 17.

Comme il sera expliqué plus loin, la manchette de liaison 15 réalise un pontage de la zone fissurée du tube 5 située sur le tronçon de tube à extraire du générateur de vapeur.

Après qu'on ait réalisé la mise en place de la manchette de liaison 15 dans le tube et le gonflage de son enveloppe souple extérieure, par l'intermédiaire du conduit souple 12, on exerce une traction vers le bas sur le conduit souple 12, en utilisant le tireur-pousseur, comme schématisé par la flèche 12' sur la figure 3. On réalise ainsi une séparation du conduit 12 et de la manchette de liaison 15 qui reste en place dans le tube 5.

L'extraction du tube peut alors être réalisée à l'aide d'un dispositif de traction 50 venant en prise avec la paroi interne du tube 5, comme il est visible sur les figures 3A et 3B. Le dispositif de traction 50 comporte, de manière connue, une tête constituée par des secteurs dentés 51 qui peuvent être écartés les uns des autres à l'intérieur du tube 5, de manière à assurer l'expansion de la tête du dispositif de traction et son accrochage sur la surface intérieure du tube 5. On exerce alors une traction sur le tube comme indiqué par les flèches 52, de manière à extraire le tube 5 de la plaque tubulaire 3. Le tronçon de tube comportant la fissure 17 ne subit pas d'effort de traction du fait du pontage assuré par la manchette de liaison 15.

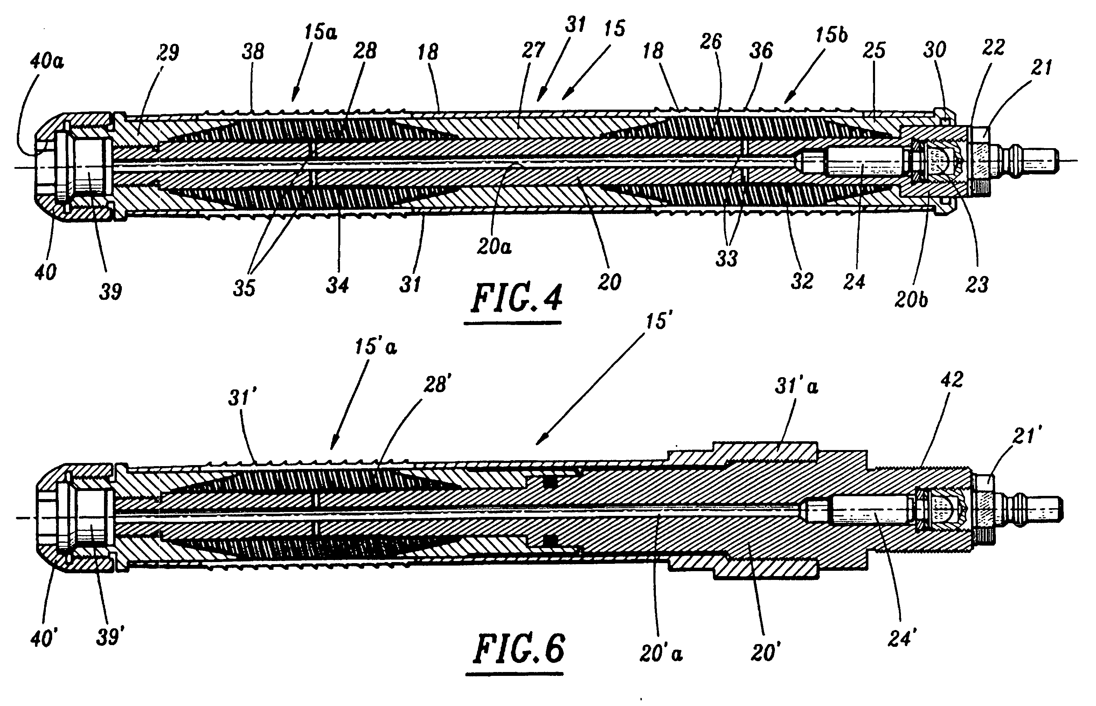

Sur la figure 4, on a représenté de manière plus détaillée et en coupe la manchette de liaison 15 qui peut être utilisée pour effectuer le pontage d'une zone fissurée d'un tube de générateur de vapeur et grâce à laquelle on peut réaliser l'extraction d'un tronçon de tube fissuré sans le détériorer.

La manchette de liaison 15 comporte un axe central 20 traversé axialement, sur toute sa longueur, par un canal central 20a.

L'axe 20 comporte une partie d'extrémité 20b élargie diamétralement comportant un alésage interne taraudé dans lequel est fixé l'embout de raccordement 21 de la manchette de liaison 15 sur lequel est engagée en force la gaine hydraulique 12b du conduit souple 12 associé à la manchette de liaison 15.

Un joint d'étanchéité 22 est intercalé entre le raccord 21 et la partie d'extrémité de l'axe 20.

A l'intérieur de la partie de sortie de l'alésage du raccord 21 placé dans l'alésage de la partie 20b de l'axe 20 est fixée une crépine de filtration 23 permettant d'éviter toute introduction d'impuretés transportées éventuellement par le fluide hydraulique dans un clapet de retour 24, dans le canal 20a de l'axe 20 et dans les chambres de gonflage de la manchette de liaison 15.

Dans la partie d'entrée du canal 20a, immédiatement en aval du raccord 21, est disposé le clapet anti-retour 24 empêchant le reflux du fluide hydraulique sous pression introduit dans le canal 20a vers le conduit d'alimentation.

Autour de l'axe central 20 de la manchette de liaison 15 sont engagés, depuis l'extrémité de la manchette de liaison comportant le raccord 21 ou extrémité inférieure jusqu'à l'extrémité opposée ou extrémité supérieure, un cône d'étanchéité inférieur 25, une première membrane tubulaire en matériau élastomère 26, une entretoise 27 comportant deux parties d'extrémité coniques d'étanchéité, une seconde membrane tubulaire souple en matériau élastomère 28 et un cône supérieur d'étanchéité 29.

L'ensemble des pièces annulaires 25, 26, 27, 28 et 29 engagées autour de l'axe central 20 est maintenu entre un épaulement de la partie d'extrémité 20b de l'axe 20 et le cône d'étanchéité supérieure 29 qui comporte un alésage central taraudé qui est vissé sur une partie d'extrémité filetée de l'axe central 20.

Le cône d'étanchéité inférieur 25 est monté de manière étanche sur la partie d'extrémité 20b de l'axe central 20 par l'intermédiaire d'un joint d'étanchéité annulaire 30.

La manchette de liaison 15 comporte de plus une enveloppe souple externe 31 qui est engagée dans une disposition coaxiale, autour de l'ensemble des pièces 25, 26, 27 et 28 lors de leur montage, de manière qu'une des extrémités de l'enveloppe souple 31 vienne en appui sur un épaulement de butée du cône inférieur d'étanchéité 25. On engage le cône d'étanchéité supérieur 29 à l'intérieur de l'extrémité supérieure de l'enveloppe souple 31 et on réalise le vissage du cône supérieur sur la partie filetée de l'axe 20. En fin de vissage, l'extrémité supérieure de l'enveloppe souple 31 vient en butée contre un épaulement du cône d'étanchéité supérieur 29.

Les deux enveloppes souples en élastomère 26 et 28 comportent des parties d'extrémité coniques qui viennent s'engager de manière étanche, lors du montage, dans des parties coniques correspondantes du cône d'étanchéité inférieur 25, de l'entretoise 27 et du cône d'étanchéité supérieur 29.

Les enveloppes souples en élastomère 26 et 28 sont appliquées de manière étanche par leurs parties d'extrémité coniques contre l'axe central 20 de la manchette de liaison, du fait du serrage réalisé par les surfaces coniques des cônes d'étanchéité 25 et 29 et de l'entretoise 27.

Dans deux zones situées en vis-à-vis des parties centrales des enveloppes souples 26 et 28, entre les parties d'extrémité coniques, l'axe 20 de la manchette de liaison présente sur sa surface extérieure une cavité annulaire de faible profondeur délimitant avec l'enveloppe souple correspondante 26 ou 28, une chambre respective 32 ou 34.

Les chambres 32 et 34 sont mises en communication avec le canal central 20a de l'axe 20, par des canaux de direction radiale respectivement 33 et 35.

L'enveloppe déformable externe 31 de la manchette de liaison 15 est une enveloppe métallique de forme tubulaire et de faible épaisseur comportant dix fentes espacées régulièrement suivant sa circonférence, dans deux zones situées respectivement en vis-à-vis des enveloppes souples en élastomère 26 et 28 sur lesquelles l'enveloppe souple 31 métallique est enfilée pratiquement sans jeu.

La surface extérieure des parties de l'enveloppe souple 31 situées entre les fentes 18 (voir figure 2) comporte une denture, respectivement 36 en ce qui concerne les parties de l'enveloppe 31 situées en vis-à-vis de l'enveloppe souple 26 et 38, en ce qui concerne les parties de l'enveloppe 31 disposées en vis-à-vis de l'enveloppe souple 28.

Les dentures 36 et 38 sont dirigées dans des directions opposées, les dents de la denture 36 étant dirigées vers la partie supérieure de la manchette de liaison 15 et les dents de la denture 38 étant inclinées vers la partie inférieure de la manchette de liaison 15.

Le cône d'étanchéité 29 comporte une partie d'extrémité supérieure comportant un alésage lisse dont le diamètre est supérieur au diamètre de la partie taraudée de l'alésage du cône d'étanchéité 29 engagée sur l'extrémité de l'axe et un filetage sur sa surface extérieure.

Un dispositif de sécurité et de limitation de pression 39 est introduit dans l'alésage du cône d'étanchéité 29 et maintenu dans cet alésage par un écrou 40 vissé sur la partie filetée du cône d'étanchéité 29. Le dispositif de sécurité et de limitation de pression 39 assure la fermeture étanche au fluide sous pression de l'extrémité du canal 20a de l'axe 20. Le dispositif de sécurité 39 comporte une membrane interdisant le passage du fluide dont la pression d'éclatement est calibrée en usine, de manière que cette membrane se brise lorsque la pression du fluide dans le canal 20a de la manchette de liaison atteint une pression qui peut être par exemple de l'ordre de 400 bars.

L'écrou 40 comporte une ouverture profilée 40a, par exemple de forme prismatique à section hexagonale dans laquelle peut être introduit un outil pour réaliser le vissage ou le dévissage de l'écrou 40, de manière à assurer la mise en place ou le démontage du dispositif de sécurité 39 à membrane.

Lorsque la manchette de liaison 15 a été introduite et mise en place dans le tube 5, comme représenté sur la figure 2, la partie d'agrippage inférieure 15a de la manchette de liaison comportant la denture 36 est disposée en-dessous de la fissure 17, à l'intérieur de la plaque tubulaire, et la zone supérieure d'agrippage 15b de la manchette de liaison 15 comportant la denture 38 est disposée au-dessus de la fissure 17 dans la partie libre du tube 5.

On alimente, par l'intermédiaire de la gaine hydraulique 12b du conduit souple 12 reliée au raccord 21, le canal central 20a de la manchette de liaison 15, en fluide hydraulique sous pression.

Le fluide hydraulique sous pression parvient dans les chambres 32 et 34 ménagées entre l'axe central 20 et les enveloppes souples 26 et 28 respectivement. Le fluide hydraulique réalise le gonflage des enveloppes 26 et 28 en élastomère et la dilatation radiale de l'enveloppe souple métallique 31 dans les deux zones d'accrochage 15a et 15b comportant les dentures 36 et 38.

Les dentures 36 et 38 viennent en contact avec la paroi intérieure du tube, de part et d'autre de la fissure 17, et assurent l'accrochage de la manchette de liaison 15 dans le tube 5.

On fixe la pression dans la manchette de liaison à une valeur déterminée, par exemple 260 bars, cette pression résultant d'essais de détermination de la pression de gonflage de la manchette de liaison nécessaire pour assurer un accrochage efficace de la manchette de liaison 15 dans le tube.

Des essais effectués dans un tube de générateur de vapeur dont le diamètre intérieur est voisin de 20 mm ont montré qu'il est possible d'exercer un effort de traction de 4000 à 4500 daN sur la manchette de liaison sans provoquer de glissement de la manchette de liaison à l'intérieur du tube, pourvu que la pression du fluide hydraulique soit maintenue à une valeur au moins égale à 230 bars.

Un effort de traction de 4000 à 4500 daN est généralement suffisant pour extraire un tronçon de tube par une ouverture de la plaque tubulaire du générateur de vapeur.

Lorsque la pression du fluide hydraulique à l'intérieur de la manchette de liaison a atteint la valeur prédéterminée, par exemple 260 bars, on arrête le pompage du fluide hydraulique, ce qui provoque la fermeture du clapet anti-retour 24. Le canal central et les chambres de la manchette de liaison sont alors totalement isolés du milieu extérieur et remplis par un fluide dont la pression se maintient à 260 bars. Cette pression du fluide assure un accrochage efficace de la manchette de liaison 15 à l'intérieur du tube. On réalise alors une séparation du conduit souple 12 de la manchette de liaison en mettant en fonctionnement le tireur-pousseur dans le sens assurant une traction sur le conduit souple 12. La manchette de liaison 15 qui est maintenue en pression grâce au clapet anti-retour reste en position dans le tube à l'intérieur du tronçon à extraire. L'opération consistant à mettre en place la manchette de liaison 15 et à la laisser en position d'accrochage à l'intérieur du tube est désignée comme opération de largage de la manchette de liaison.

Après retrait du conduit souple 12, on met en place, à l'intérieur de la boîte à eau, un outil de traction tel que l'outil 50 (figures 3A et 3B) ayant un organe de traction muni de moyens d'accrochage 51 dans une partie du tronçon de tube 5.

On réalise l'extraction du tronçon du tube 5 comportant la zone traversée par la fissure 17 en exerçant une traction sur le tube. La traction est transmise depuis la zone 15a du tube jusqu'à la zone 15b par la manchette de liaison 15. La manchette de liaison 15 réalise donc un pontage de la zone du tube traversée par la fissure 17, de sorte que le tube ne subit aucune contrainte pendant l'extraction mettant en oeuvre une force de traction qui peut être de l'ordre de 4000 à 4500 daN.

On peut réaliser la mise en place et l'accrochage de plusieurs manchettes de liaison successivement dans plusieurs tubes du faisceau du générateur de vapeur pour réaliser ensuite successivement l'extraction des tronçons de tube dans lesquels ont été placés les manchettes de liaison.

Le procédé suivant l'invention permet donc de réaliser de manière simple et rapide l'extraction de tronçons de tube destinés à des expertises, sans endommager les tronçons au cours de leur extraction.

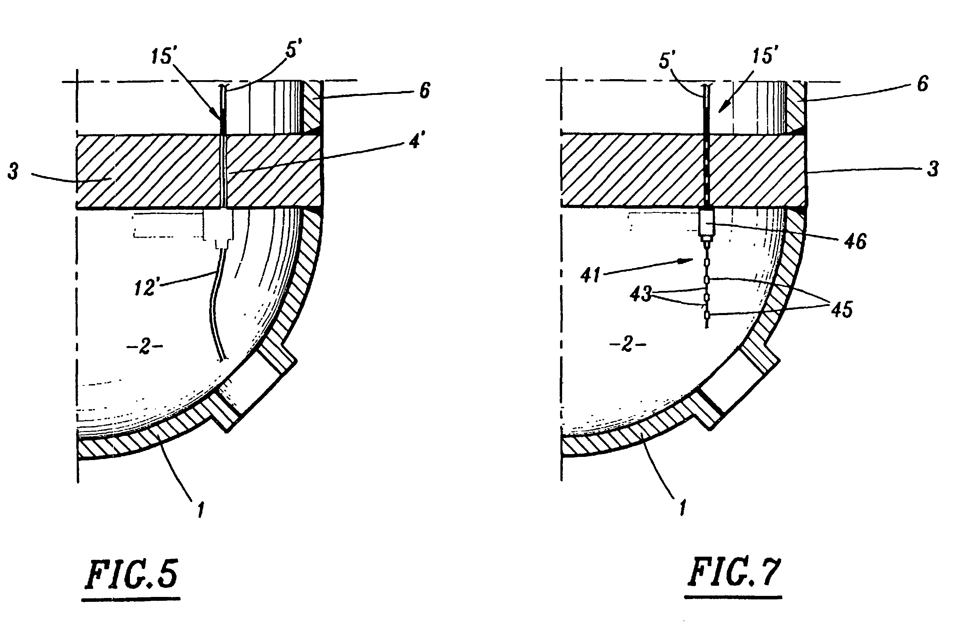

Sur la figure 5, on a représenté de manière schématique une partie de la boîte à eau 2 d'un générateur de vapeur et un tube périphérique 5' du générateur de vapeur, c'est-à-dire un tube dont la partie d'extrémité est fixée dans une ouverture 4' traversant la plaque tubulaire 3 au voisinage de sa partie périphérique fixée sur la paroi 1 de la boîte à eau et sur l'enveloppe 6 du générateur de vapeur.

Dans le cas de l'extraction d'un tube périphérique fissuré dans sa zone de transition, il peut se produire une rupture du tube, au niveau de la fissure dans la zone de transition, si la fissure n'a pas été détectée avant l'extraction.

On ne peut alors terminer l'extraction de la partie supérieure du tube au-dessus de la fissure ayant provoqué une rupture ; la partie restante du tube 5', comme représenté sur la figure 5, reste à l'intérieur du générateur de vapeur.

Pour réaliser l'extraction de la partie restante du tronçon de tube 5', il est nécessaire d'utiliser un ensemble d'extraction d'un type particulier, principalement du fait du dégagement réduit à l'intérieur de la boîte tubulaire, dans l'alignement axial du tube, résultant de la forme courbe de la paroi 1 de la boîte à eau.

Dans ce cas, on utilise une manchette de liaison 15' d'un type particulier qui sera décrit ci-après et un élément de traction souple 41 constitué par un câble sur lequel sont fixés des manchons de traction.

Sur la figure 6, on a représenté dans une vue en coupe, la manchette de liaison 15' dont la structure générale est analogue à la structure de la manchette de liaison 15 représentée sur la figure 4.

Toutefois, la manchette de liaison 15' ne comporte qu'une partie d'accrochage 15'a constituée par une zone dentée de son enveloppe souple extérieure 31'.

L'axe 20' de la manchette de liaison comporte un tronçon inférieur dont le diamètre est supérieur au diamètre du tronçon supérieur de l'axe sur lequel on réalise le vissage de l'enveloppe souple 31', par une partie inférieure 31'a de l'enveloppe taraudée intérieurement.

La partie d'extrémité inférieure de l'axe 20' dans laquelle sont montés l'embout d'alimentation en fluide hydraulique sous pression 21' et le clapet anti-retour 24' comporte une partie filetée externe 42 permettant de raccorder la manchette de liaison 15' au dispositif de traction souple 41 qui sera décrit ci-après.

La partie d'accrochage 15'a de la manchette de liaison 15' est réalisée de manière identique aux parties d'accrochage 15a et 15b de la manchette de liaison 15 représenté sur la figure 4. Cette partie d'accrochage comporte une enveloppe souple gonflable 28' et une zone de l'enveloppe souple externe métallique 31' de la manchette de liaison comportant une denture.

A sa partie d'extrémité supérieure, le canal central 20'a de l'axe 20' de la manchette de liaison 15' est fermé par un dispositif de sécurité 39' maintenu par un écrou 40'.

Les opérations de mise en place et d'accrochage de la manchette de liaison 15' dans le tube 5' sont sensiblement identiques aux opérations d'accrochage de la manchette de liaison double 15, comme il a été décrit plus haut.

Après avoir mis en place dans la partie d'extrémité du tronçon de tube 5' restant dans le générateur de vapeur la manchette de liaison 15', on réalise le gonflage de la partie d'accrochage 15'a de la manchette de liaison en alimentant la manchette de liaison 15' en fluide hydraulique sous pression, par l'intermédiaire d'un conduit souple relié au raccord 21' fixé à la partie inférieure de la manchette de liaison 15'. On réalise le gonflage de la partie d'accrochage 15'a de la manchette de liaison 15' à une pression de 260 bars. On arrête le pompage de fluide sous pression et le clapet anti-retour 24' assure la fermeture du canal 20'a de l'axe 20' sous une pression de 260 bars.

On réalise alors la séparation du conduit souple d'alimentation en fluide hydraulique et du raccord 21' par traction sur le conduit souple 12' (figure 5).

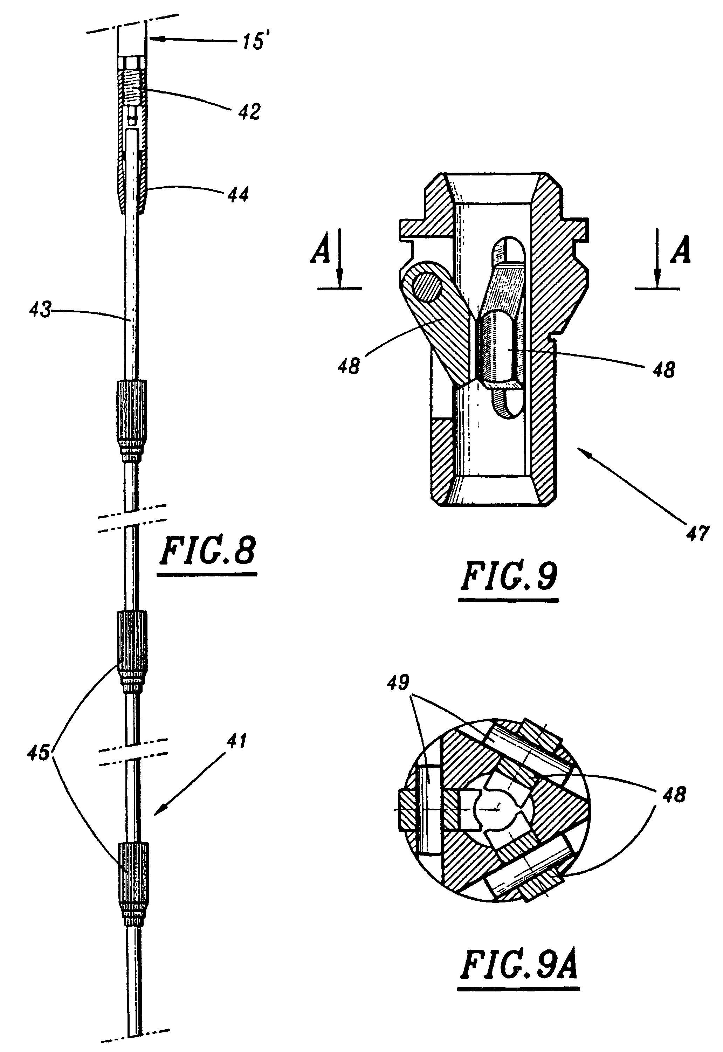

On peut alors réaliser l'accrochage de la partie d'extrémité d'un élément de traction 41 tel que représenté sur la figure 8, sur la partie d'extrémité filetée inférieure 42 de la manchette de liaison 15'.

L'élément de traction 41 est constitué par un câble 43 sur lequel sont fixés par sertissage, à l'une de ses extrémités, un manchon de raccordement 44 dont l'alésage intérieur est taraudé de telle sorte que le manchon de raccordement 44 puisse être vissé sur la partie d'extrémité inférieure taraudée 42 de la manchette de liaison 15', ainsi qu'une pluralité de manchons de butée 45 régulièrement espacés suivant la longueur du câble 43.

Comme il est visible sur la figure 7, l'extraction du tronçon de tube 5' est réalisée après mise en place et largage de la manchette 15' à l'intérieur du tronçon de tube, en faisant passer l'élément de traction 41 à travers un vérin de traction 46 qui est mis en place sous la plaque tubulaire 3 dans l'alignement axial du tube 5'.

On effectue le raccordement par vissage du manchon de raccordement supérieur 44 de l'élément de traction 41 avec la partie inférieure taraudée 42 de la manchette de liaison 15', pour réaliser l'extraction du tube en exerçant une traction sur la manchette de liaison 15', par l'intermédiaire du vérin 46 en appui sur la face inférieure de la plaque tubulaire 3 et de l'élément de traction 41 relié à sa partie supérieure à la manchette de liaison 15.

Comme il est visible sur les figures 9 et 9A, le vérin 46 comporte un mandrin de traction 47 de forme tubulaire dont la paroi est percée de trois lumières de direction axiale dans chacune desquelles est monté un doigt pivotant 48, par l'intermédiaire d'un axe horizontal 49. Les doigts pivotants 48 sont rappelés vers l'intérieur du mandrin de traction, c'est-à-dire vers l'axe du mandrin de traction par des moyens de rappel élastiques tels que des ressorts.

Les doigts 48 permettent de réaliser un verrouillage du mandrin de traction 47 sur les manchons de butée 45 de l'élément de traction 41. Les manchons de butée 45 sont espacés par une longueur légèrement inférieure à la course du vérin.

Dans le sens de la traction, les doigts 48 transmettent l'effort de traction au manchon de butée 45 sur lequel ils sont en appui de manière à transmettre la traction à l'élément souple 41 et à la manchette de liaison 15'.

Dans le sens correspondant à la rétraction du vérin après un déplacement d'un pas, les doigts 48 peuvent s'écarter pour venir se placer au-dessus d'un nouveau manchon de butée 45 par l'intermédiaire duquel la traction sera transmise au câble 43 et à la manchette de liaison 15' pendant la course suivante du vérin.

On réalise ainsi progressivement l'extraction du tronçon de tube 5' de la plaque tubulaire.

La manchette de liaison 15' fixé à l'intérieur du tube 5' par l'intermédiaire duquel on exerce la traction sur le tube est susceptible de résister à un effort de traction de 3500 daN, ce qui permet d'extraire le tube 5' de la plaque tubulaire.

Lorsque le tronçon de tube 5' a été tiré jusqu'à la face d'entrée 3a de la plaque tubulaire 3, on peut démonter la manchette de liaison 15' en séparant l'élément de traction 41 de sa partie inférieure par dévissage et en engageant sur le raccord inférieur de la manchette de liaison 15' un conduit souple d'alimentation en fluide hydraulique. On alimente alors la manchette de liaison 15' en fluide hydraulique jusqu'à une pression supérieure à 400 bars, ce qui provoque l'éclatement de la membrane du dispositif de sécurité 39'.

Après avoir fait sortir la manchette de liaison 15' du tube 5', on reprend l'extraction du tube par des moyens de traction classiques.

On a pu ainsi extraire complètement un tronçon de tube périphérique ayant subi une rupture dans la zone de transition.

Le procédé suivant l'invention permet donc d'extraire des tronçons de tubes d'échangeur de chaleur fissurés, pour expertise, sans exercer de contraintes préjudiciables sur ces tronçons de tubes fissurés et d'extraire également des tronçons de tubes périphériques ayant subi une rupture dans la zone de transition.

Le procédé suivant l'invention peut être mis en oeuvre de manière simple et rapide, en particulier du fait qu'on dissocie les opérations de mise en place de la manchette de liaison dans le tronçon de tube à extraire et l'extraction du tube proprement dite.

L'invention ne se limite pas aux modes de réalisation qui ont été décrits.

C'est ainsi qu'on peut imaginer des manchettes de liaison qui peuvent être mises en place et larguées à l'intérieur des tubes de générateur de vapeur, ayant une structure différente de celle qui a été décrite.

Ces manchettes de liaison comportent une ou deux zones d'accrochage à l'intérieur du tube, suivant qu'elles sont utilisées pour réaliser le pontage d'une zone fissurée d'un tronçon de tube à extraire pour expertise ou pour extraire un tronçon de tube, par exemple un tronçon de tube périphérique ayant subi une fissure dans la zone de transition, au-dessus de la plaque tubulaire, au cours d'une première opération d'extraction.

## Revendications

1. Procédé d'extraction d'un tronçon d'un tube (5, 5') d'un échangeur de chaleur serti à ses extrémités dans une plaque tubulaire (3, 3'), dans lequel :
- on introduit dans le tube (5, 5'), par l'une de ses extrémités, une manchette de liaison (15, 15') comportant une enveloppe métallique tubulaire déformable (31, 31') ayant au moins une zone dentée d'agrippage (15a, 15b, 15'a, 15'b) et des moyens (26, 28, 28') de dilatation radiale de l'enveloppe déformable (31, 31') ;
- on déplace la manchette de liaison (15, 15') dans le tube (5, 5') jusqu'à sa mise en place dans le tronçon de tube (5, 5') à extraire ;
- on dilate l'enveloppe déformable (31, 31') de la manchette de liaison (15, 15'), de manière à mettre la zone dentée (15a, 15b, 15'a) de l'enveloppe déformable (31, 31') en contact avec pression contre la surface intérieure du tube (5, 5') ; et
- on exerce une traction sur le tronçon du tube (5, 5') dans lequel est fixée la manchette de liaison (15, 15') pour réaliser son extraction de la plaque tubulaire (3, 3') de l'échangeur de chaleur,
**caractérisé par le fait que** l'enveloppe déformable est une enveloppe souple, que les moyens de dilatation radiale de l'enveloppe souple (31, 31') sont des moyens de gonflage alimentés par un conduit (12, 12') en fluide sous pression, la manchette de liaison (15, 15') étant fixée à l'extrémité du conduit (12, 12') d'alimentation en fluide sous pression, avec interposition d'un clapet anti-retour (24, 24'),
et qu'on sépare le conduit (12, 12') de la manchette de liaison (15, 15') maintenue en position dans le tube (5, 5'), une pression de gonflage de la manchette de liaison (15, 15') étant maintenue, après séparation du conduit (12, 12'), lorsqu'on exerce la traction sur le tronçon de tube (5, 5'), grâce au clapet anti-retour (24, 24').

2. Procédé suivant la revendication 1, **caractérisé par le fait que** l'enveloppe souple métallique (31) de la manchette de liaison (15, 15') comporte deux zones dentées d'agrippage (15a, 15b) espacées l'une de l'autre suivant la longueur axiale de l'enveloppe de la manchette de liaison (15), et qu'on met la manchette de liaison (15) en place dans un tronçon de tube (5) comportant au moins une fissure (17) de manière que les zones dentées d'agrippage (15a, 15b) de l'enveloppe souple métallique (31) de la manchette de liaison (15) soient placées de part et d'autre de la zone du tronçon de tube (5) comportant la fissure (17).

3. Procédé suivant la revendication 1, **caractérisé par le fait que** l'enveloppe souple métallique (31') de la manchette de liaison (15') comporte une seule zone dentée d'agrippage (15'a) et qu'on exerce une traction sur le tronçon de tube (5') pour réaliser son extraction, par l'intermédiaire de la manchette de liaison (15').

4. Procédé suivant la revendication 3, dans le cas où le tube (5') est un tube périphérique du générateur de vapeur, **caractérisé par le fait qu'**on exerce une traction sur la manchette de liaison (15') par l'intermédiaire d'un élément de traction souple (41).

5. Dispositif d'extraction d'un tronçon de tube (5, 5') d'un échangeur de chaleur serti à ses extrémités dans une plaque tubulaire (3, 3') comportant des moyens de traction (50) sur le tronçon de tube (5, 5'), comprenant une manchette de liaison (15, 15') comportant une enveloppe métallique tubulaire déformable (31, 31') ayant au moins une zone dentée d'agrippage (15a, 15b, 15'a) sur sa surface externe et des moyens de dilatation radiale de l'enveloppe métallique déformable (31, 31') dans la zone dentée (15a, 15b, 15'a), **caractérisé par le fait que** les moyens de dilatation radiale de l'enveloppe métallique déformable comportent :
- au moins une enveloppe souple (26, 28, 28') en matériau élastomère en conta avec la surface interne de l'enveloppe métallique déformable (31, 31') qui est souple, délimitant une chambre (32, 34) avec une partie interne (20) de la manchette de liaison, et
- un conduit (12, 12') d'alimentation de la chambre (32, 34) en fluide sous pression relié à la manchette de liaison (125, 15') à l'une de ses extrémités, par l'intermédiaire d'un clapet anti-retour (24, 24').

6. Dispositif suivant la revendication 5, **caractérisé par le fait que** la partie interne (20, 20') de la manchette de liaison (15, 15') est constituée par un axe sur lequel est engagée l'enveloppe souple (26, 28, 28') de forme tubulaire, comportant suivant toute sa longueur un canal (20a, 20'a) de direction axiale reliée à l'une de ses extrémités au conduit (12, 12') d'alimentation en fluide hydraulique et au moins un canal de direction radiale (33, 35) reliant le canal (20a, 20'a) de direction axiale et la chambre (32, 34) délimitée entre l'enveloppe souple (26, 28, 28') et une partie de l'axe (20, 20') comportant une cavité annulaire.

7. Dispositif suivant la revendication 6, **caractérisé par le fait que** le conduit axial (20a, 20'a) de la manchette de liaison (15, 15') est fermé à l'une de ses extrémités opposées à l'extrémité reliée au conduit (12, 12') et comportant le clapet anti-retour (24, 24'), par un dispositif de sécurité comportant une membrane susceptible de se rompre, lorsque la pression du fluide hydraulique dans le canal (20a, 20'a) de la manchette de liaison dépasse une limite prédéterminée.

8. Dispositif suivant l'une quelconque des revendications 5 à 7, **caractérisé par le fait que** l'enveloppe souple métallique tubulaire (31, 31') de la manchette de liaison (15, 15') comporte deux zones dentées d'agrippage (15a, 15b) espacées l'une de l'autre dans la direction axiale de l'enveloppe souple métallique (31, 31') de la manchette de liaison (15, 15').

9. Dispositif suivant l'une quelconque des revendications 5 à 7, **caractérisé par le fait que** l'enveloppe souple (31') de la manchette de liaison (15') comporte une seule zone dentée d'agrippage (15'a).

10. Dispositif suivant l'une quelconque des revendications 5 à 9, **caractérisé par le fait que** la partie interne (20, 20') de la manchette de liaison (15, 15') comporte, à l'une de ses extrémités, un moyen (42) pour relier les moyens de traction (41) sur le tronçon de tube (5, 5') à la manchette de liaison (15, 15').

11. Dispositif suivant la revendication 10, **caractérisé par le fait que** le dispositif de traction est un dispositif souple comportant un câble (43) sur lequel est fixée, à l'une de ses extrémités, une douille (44) de fixation à la manchette de liaison (15') et suivant sa longueur, des manchons de traction (45) espacés l'un de l'autre d'une distance constante ainsi qu'un vérin de traction (46) comportant un mandrin de traction ayant des doigts pivotants (48) susceptibles de venir en prise avec les manchons de traction (45) pour transmettre la traction du vérin au câble souple (43) et à la manchette de liaison (15'), dans un sens de fonctionnement du vérin (46) et de passer d'une position de verrouillage sur un premier manchon (45) à une position de verrouillage sur un second manchon (45) dans un second sens de fonctionnement du vérin (46), la course du vérin (46) étant au moins égale à l'espacement constant entre les manchons (45) fixés sur le câble souple (43).

12. Dispositif suivant l'une quelconque des revendications 5 à 11, **caractérisé par le fait que** l'enveloppe souple métallique tubulaire (31, 31') de la manchette de liaison (15, 15') comporte dans la zone dentée d'agrippage (15a, 15b, 15'a) une pluralité de fentes longitudinales (18) délimitant des zones déformables de l'enveloppe souple métallique tubulaire (31, 31') comportant une denture.

13. Dispositif suivant l'une quelconque des revendications 5 à 12, **caractérisé par le fait qu'**il comporte un tireur-pousseur à galets (9) en prise avec le conduit (12, 12') d'alimentation en fluide hydraulique constitué par un conduit souple, pour déplacer la manchette de liaison (15, 15') à l'intérieur du tube (5, 5').

14. Dispositif suivant l'une quelconque des revendications 5 à 13, **caractérisé par le fait que** le conduit (12, 12') d'alimentation en fluide hydraulique est engagé, à l'une de ses extrémités, sur l'extrémité axiale de la partie interne (20, 20') de la manchette de liaison (15, 15') de manière à pouvoir être séparé de la manchette de liaison (15, 15') accrochée à l'intérieur du tube (5, 5'), par simple traction sur le conduit (12, 12') d'alimentation en fluide sous pression.

15. Utilisation d'un procédé suivant l'une quelconque des revendications 1 à 4 ou du dispositif selon l'une quelconque des revendications 5 à 14, pour réaliser l'extraction d'un tronçon de tube (5, 5') de la plaque tubulaire (3) d'un générateur de vapeur à eau sous pression, par l'intérieur d'une boîte à eau (2) dans laquelle débouchent les extrémités des tubes (5, 5') du générateur de vapeur, sur une face d'entrée (3a) de la plaque tubulaire (3).

16. Utilisation suivant la revendication 15, **caractérisée par le fait que** le tube (5, 5') débouche dans la boite à eau (2), dans une zone périphérique de la plaque tubulaire (3).

## Claims

1. Method for extracting a section of a tube (5, 5') from a heat exchanger crimped at its ends in a tube plate (3, 3'), in which:
- a connecting sleeve (15, 15') comprising a deformable tubular metal casing (31, 31') having at least one toothed gripping zone (15a, 15b, 15'a, 15'b) and means (26, 28, 28') for radially expanding the deformable casing (31, 31') is introduced into the tube (5, 5') through one of its ends;
- the connecting sleeve (15, 15') is displaced in the tube (5, 5') until it is in place in the tube section (5, 5') to be extracted;
- the deformable casing (31, 31') of the connecting sleeve (15, 15') is expanded so as to put the toothed zone (15a, 15b, 15'a) of the deformable casing (31, 31') in pressing contact with the inner surface of the tube (5, 5'); and
- a pull is exerted on the section of the tube (5, 5') in which the connecting sleeve (15, 15') is fixed, in order to bring about its extraction from the tube plate (3, 3') of the heat exchanger,
**characterised in that** the deformable casing is a flexible casing, **in that** the means for radially expanding the flexible casing (31, 31') are inflating means supplied with fluid under pressure by a conduit (12, 12'), the connecting sleeve (15, 15') being fixed to the end of the conduit (12, 12') for supplying fluid under pressure, with interposition of a non-return valve (24, 24'),
and **in that** the conduit (12, 12') is separated from the connecting sleeve (15, 15') held in position in the tube (5, 5'), a pressure for inflating the connecting sleeve (15, 15') being maintained, after separation of the conduit (12, 12'), when the pull is exerted on the tube section (5, 5'), by virtue of the non-return valve (24, 24').

2. Method according to Claim 1, **characterised in that** the flexible metal casing (31) of the connecting sleeve (15, 15') comprises two toothed gripping zones (15a, 15b) spaced apart along the axial length of the casing of the connecting sleeve (15), and **in that** the connecting sleeve (15) is put in place in a tube section (5) having at least one crack (17) so that the toothed gripping zones (15a, 15b) of the flexible metal casing (31) of the connecting sleeve (15) are placed on either side of the zone of the tube section (5) having the crack (17).

3. Method according to Claim 1, **characterised in that** the flexible metal casing (31') of the connecting sleeve (15') comprises a single toothed gripping zone (15'a) and **in that** a pull is exerted on the tube section (5') in order to bring about its extraction, by way of the connecting sleeve (15').

4. Method according to Claim 3, in the case where the tube (5') is a peripheral tube of the steam generator, **characterised in that** a pull is exerted on the connecting sleeve (15') by way of a flexible pulling element (41).

5. Device for extracting a tube section (5, 5') from a heat exchanger crimped at its ends in a tube plate (3, 3'), comprising means (50) for exerting a pull on the tube section (5, 5'), including a connecting sleeve (15, 15') comprising a deformable tubular metal casing (31, 31') having at least one toothed gripping zone (15a, 15b, 15'a) on its outer surface and means for radially expanding the deformable metal casing (31, 31') in the toothed zone (15a, 15b, 15'a), **characterised in that** the means for radially expanding the deformable metal casing comprise:
- at least one flexible casing (26, 28, 28') made of elastomeric material in contact with the inner surface of the deformable metal casing (31, 31') which is flexible, delimiting a chamber (32, 34) with an inner part (20) of the connecting sleeve, and
- a conduit (12, 12') for supplying the chamber (32, 34) with fluid under pressure and connected to the connecting sleeve (15, 15') at one of its ends, by way of a non-return valve (24, 24').

6. Device according to Claim 5, **characterised in that** the inner part (20, 20') of the connecting sleeve (15, 15') consists of a shaft on which the flexible casing (26, 28, 28') of tubular shape is engaged, comprising throughout its length an axially directed channel (20a, 20'a) connected at one of its ends to the conduit (12, 12') for supplying hydraulic fluid and at least one radially directed channel (33, 35) connecting the axially directed channel (20a, 20'a) and the chamber (32, 34) delimited between the flexible casing (26, 28, 28') and a part of the shaft (20, 20') comprising an annular cavity.

7. Device according to Claim 6, **characterised in that** the axial conduit (20a, 20'a) of the connecting sleeve (15, 15') is closed at one of its ends opposite the end connected to the conduit (12, 12') and comprising the non-return valve (24, 24') by a safety device comprising a membrane capable of bursting when the pressure of the hydraulic fluid in the channel (20a, 20'a) of the connecting sleeve exceeds a predetermined limit.

8. Device according to any one of Claims 5 to 7, **characterised in that** the flexible tubular metal casing (31, 31') of the connecting sleeve (15, 15') comprises two toothed gripping zones (15a, 15b) spaced apart in the axial direction of the flexible metal casing (31, 31') of the connecting sleeve (15, 15').

9. Device according to any one of Claims 5 to 7, **characterised in that** the flexible casing (31') of the connecting sleeve (15') comprises a single toothed gripping zone (15'a).

10. Device according to any one of Claims 5 to 9, **characterised in that** the inner part (20, 20') of the connecting sleeve (15, 15') comprises, at one of its ends, a means (42) for connecting the means (41) for exerting a pull on the tube section (5, 5') to the connecting sleeve (15, 15').

11. Device according to Claim 10, **characterised in that** the pulling device is a flexible device comprising a cable (43) on which is fixed, at one of its ends, a socket (44) for fixing to the connecting sleeve (15') and, along its length, pulling cuffs (45) spaced apart by a constant distance, as well as a pulling actuator (46) comprising a pulling chuck having pivoting fingers (48) capable of engaging with the pulling cuffs (45) in order to transmit the pull of the jack to the flexible cable (43) and to the connecting sleeve (15') in one operating direction of the actuator (46) and of moving from a locking position on a first cuff (45) to a locking position on a second cuff (45) in a second operating direction of the actuator (46), the stroke of the actuator (46) being at least equal to the constant spacing between the cuffs (45) fixed on the flexible cable (43).

12. Device according to any one of Claims 5 to 11, **characterised in that** the flexible tubular metal casing (31, 31') of the connecting sleeve (15, 15') comprises in the toothed gripping zone (15a, 15b, 15'a) a plurality of longitudinal slits (18) delimiting deformable zones of the flexible tubular metal casing (31, 31') comprising toothing.

13. Device according to any one of Claims 5 to 12, **characterised in that** it comprises a roller pusher-puller (9) engaged with the conduit (12, 12') for supplying hydraulic fluid consisting of a flexible conduit, in order to displace the connecting sleeve (15, 15') inside the tube (5, 5').

14. Device according to any one of Claims 5 to 13, **characterised in that** the conduit (12, 12') for supplying hydraulic fluid is engaged, at one of its ends, on the axial end of the inner part (20, 20') of the connecting sleeve (15, 15') so as to be able to be separated from the connecting sleeve (15, 15') caught on the inside of the tube (5, 5'), by simply exerting a pull on the conduit (12, 12') for supplying fluid under pressure.

15. Use of a method according to any one of Claims 1 to 4 or of the device according to any one of Claims 5 to 14, for bringing about the extraction of a tube section (5, 5') from the tube plate (3) of a pressurised-water steam generator through the inside of a water box (2) into which the ends of the tubes (5, 5') of the steam generator open on an entry face (3a) of the tube plate (3).

16. Use according to Claim 15, **characterised in that** the tube (5, 5') opens into the water box (2) in a peripheral zone of the tube plate (3).

## Patentansprüche

1. Verfahren zum Herausziehen eines Abschnitts eines Rohrs (5, 5') eines Wärmetauschers, das an seinen Enden in einer Rohrplatte (3, 3') befestigt ist, bei dem:
- in das Rohr (5, 5') durch eines seiner Enden eine Verbindungsmanschette (15, 15') eingeführt wird, die eine röhrenförmige, verformbare Hülle (31, 31') aus Metall umfasst, die mindestens einen gezahnten Befestigungsbereich (15a, 15b, 15'a, 15'b) und Vorrichtungen (26, 28, 28') zur radialen Ausdehnung der verformbaren Hülle (31, 31') aufweist;
- die Verbindungsmanschette (15, 15') so weit in das Rohr (5, 5') geschoben wird, bis es sich in dem herauszuziehenden Abschnitt des Rohrs (5, 5') befindet;
- die verformbare Hülle (31, 31') der Verbindungsmanschette (15, 15') so gedehnt wird, dass der gezahnte Bereich (15a, 15b, 15'a) der verformbaren Hülle (31, 31') mit Druck in Berührung mit der Innenfläche des Rohrs (5, 5') kommt; und
- auf den Abschnitt des Rohrs (5, 5'), in dem die Verbindungsmanschette (15, 15') befestigt ist, ein Zug ausgeübt wird, sodass er aus der Rohrplatte (3, 3') des Wärmetauschers herausgezogen werden kann,
**dadurch gekennzeichnet, dass** die verformbare Hülle eine biegsame Hülle ist, dass die Vorrichtungen zur radialen Ausdehnung der biegsamen Hülle (31, 31') Vorrichtungen zum Aufblasen sind, die über eine Druckfluid-Leitung (12, 12') versorgt werden, wobei die Verbindungsmanschette (15, 15') am Ende der Druckfluid-Versorgungsleitung (12, 12') befestigt und dazwischen eine Rückschlagklappe (24, 24') vorgesehen ist,
und dass die Leitung (12, 12') von der Verbindungsmanschette (15, 15') getrennt wird, die in dem Rohr (5, 5') in Position gehalten wird, wobei ein Aufblasdruck der Verbindungsmanschette (15, 15') nach der Trennung der Leitung (12, 12') durch die Rückschlagklappe (24, 24') aufrechterhalten wird, wenn auf den Abschnitt des Rohrs (5, 5') die Zugbewegung ausgeübt wird.

2. Verfahren nach Anspruch 1, **dadurch gekennzeichnet, dass** die biegsame Metallhülle (31) der Verbindungsmanschette (15, 15') zwei gezahnte Befestigungsbereiche (15a, 15b) umfasst, die voneinander in Axiallänge der Hülle der Verbindungsmanschette (15) beabstandet sind, und dass die Verbindungsmanschette (15) in einen Abschnitt eines Rohrs (5) eingesetzt wird, der mindestens einen Riss (17) aufweist, sodass die gezahnten Befestigungsbereiche (15, 15b) der biegsamen Metallhülle (31) der Verbindungsmanschette (15) beidseits des Bereichs des Rohrabschnitts (5) angeordnet sind, der den Riss (17) umfasst.

3. Verfahren nach Anspruch 1, **dadurch gekennzeichnet, dass** die biegsame Metallhülle (31') der Verbindungsmanschette (15') einen einzigen gezahnten Befestigungsbereich (15'a) umfasst und dass auf den Rohrabschnitt (5') ein Zug ausgeübt wird, damit er mit Hilfe der Verbindungsmanschette (15') herausgezogen werden kann.

4. Verfahren nach Anspruch 3 für den Fall, dass das Rohr (5') ein peripherisches Rohr des Dampferzeuger ist, **dadurch gekennzeichnet, dass** auf die Verbindungsmanschette (15') mittels eines biegsamen Zugelements (41) ein Zug ausgeübt wird.

5. Vorrichtung zum Herausziehen eines Abschnitts eines Rohrs (5, 5') eines Wärmetauschers, das an seinen Enden in einer Rohrplatte (3, 3') befestigt ist, welche Vorrichtungen zum Ziehen (50) an dem Abschnitt des Rohrs (5, 5') aufweist, die eine Verbindungsmanschette (15, 15') mit einer verformbaren, röhrenförmigen Metallhülle (31, 31') umfassen, die mindestens einen gezahnten Befestigungsbereich (15a, 15b, 15'a) an ihrer Außenfläche und Vorrichtungen zur radialen Ausdehnung der verformbaren Metallhülle (31, 31') in dem gezahnten Bereich (15a, 15b, 15'a) hat, **dadurch gekennzeichnet, dass** die Vorrichtungen zur radialen Ausdehnung der verformbaren Metallhülle umfassen:
- mindestens eine biegsame Hülle (26, 28, 28') aus einem Elastomer, die in Berührung mit der Innenfläche der verformbaren Metallhülle (31, 31'), die biegsam ist, steht und mit einem Innenbereich (20) der Verbindungsmanschette eine Kammer (32, 34) begrenzt, und
- eine Leitung (12, 12') zur Versorgung der Kammer (32, 34) mit Druckfluid, die mit der Verbindungsmanschette (15, 15') an einem ihrer Enden verbunden ist, und zwar mittels einer Rückschlagklappe (24, 24').

6. Vorrichtung nach Anspruch 5, **dadurch gekennzeichnet, dass** der Innenbereich (20, 20') der Verbindungsmanschette (15, 15') von einer Welle gebildet wird, auf die die röhrenförmige, biegsame Hülle (26, 28, 28') geführt wird, die über ihre ganze Länge einen axial ausgerichteten Kanal (20a, 20'a) umfasst, der an einem seiner Enden mit der Leitung (12, 12') zur Versorgung mit Hydaulikfluid verbunden ist, und mindestens einen axial ausgerichteten Kanal (33, 35), der den axial ausgerichteten Kanal (20, 20'a) und die Kammer (32, 34) miteinander verbindet, die zwischen der biegsamen Hülle (26, 28, 28') und einem Bereich der Welle (20, 20') gebildet wird, der eine ringförmige Aushöhlung äufweist.

7. Vorrichtung nach Anspruch 6, **dadurch gekennzeichnet, dass** die axiale Leitung (20a, 20'a) der Verbindungsmanschette (15, 15') an einem ihrer Enden, das entgegengesetzt zu dem mit der Leitung (12, 12') verbundenen Ende ist und die Rückschlagklappe (24, 24') umfasst, mittels einer Sicherheitsvorrichtung geschlossen ist, die eine Membran umfasst, die geeignet ist, zu reißen, wenn der Druck des Hydraulikfluids in dem Kanal (20a, 20'a) der Verbindungsmanschette einen vorbestimmten Grenzwert überschreitet.

8. Vorrichtung nach einem der Ansprüche 5 bis 7, **dadurch gekennzeichnet, dass** die röhrenförmige, biegsame Metallhülle (31, 31') der Verbindungsmanschette (15, 15') zwei gezahnte Befestigungsbereiche (15a, 15b) aufweist, die in Axialrichtung der biegsamen Metallhülle (31, 31') der Verbindungsmanschette (15, 15') voneinander beabstandet sind.

9. Vorrichtung nach einem der Ansprüche 5 bis 7, **dadurch gekennzeichnet, dass** die biegsame Hülle (31') der Verbindungsmanschette (15') einen einzigen gezahnten Befestigungsbereich (15'a) aufweist.

10. Vorrichtung nach einem der Ansprüche 5 bis 9, **dadurch gekennzeichnet, dass** der Innenbereich (20, 20') der Verbindungsmanschette (15, 15') an einem seiner Enden eine Vorrichtung (42) zur Verbindung der Vorrichtung zum Ziehen (41) am Rohrabschnitt (5, 5') mit der Verbindungsmanschette (15, 15') umfasst.

11. Vorrichtung nach Anspruch 10, **dadurch gekennzeichnet, dass** die Zugvorrichtung eine biegsame Vorrichtung mit einem Kabel (43) ist, an dem an einem seiner Enden eine Hülse (44) zur Befestigung an der Verbindungsmanschette (15') und entlang ihrer Länge Zugmuffen (45) befestigt sind, die voneinander in konstantem Abstand beabstandet sind, sowie ein Zugzylinder (46), der einen Zugdorn mit schwenkbaren Fingern (48) umfasst, die geeignet sind, mit den Zugmuffen (45) in Eingriff gebracht zu werden, um den Zug des Zylinders auf das biegsame Kabel (43) und die Verbindungsmanschette (15') in einer Betriebsrichtung des Zylinders (46) zu übertragen und aus einer Verriegelungsposition an einer ersten Muffe (45) in eine Verriegelungsposition an einer zweiten Muffe (45) in einer zweiten Betriebsrichtung des Zylinders (46) zu gelangen, wobei der Hub des Zylinders (46) mindestens gleich dem konstanten Abstand zwischen den an dem biegsamen Kabel (43) befestigten Muffen (45) ist.

12. Vorrichtung nach einem der Ansprüche 5 bis 11, **dadurch gekennzeichnet, dass** die röhrenförmige, biegsame Metallhülle (31, 31') der Verbindungsmanschette (15, 15') in dem gezahnten Befestigungsbereich (15a, 15b, 15'a) mehrere Längsspalte (18) aufweist, die verformbare Bereiche der röhrenförmigen, biegsamen Metallhülle (31, 31') begrenzen, die mit einer Zahnung versehen sind.

13. Vorrichtung nach einem der Ansprüche 5 bis 12, **dadurch gekennzeichnet, dass** sie eine Zug-Schub-Vorrichtung mit Rollen (9) aufweist, die mit der Hydraulikfluid-Versorgungsleitung (12, 12') in Eingriff steht, die von einer biegsamen Leitung gebildet wird, um die Verbindungsmanschette (15, 15') innerhalb des Rohrs (5, 5') zu bewegen.

14. Vorrichtung nach einem der Ansprüche 5 bis 13, **dadurch gekennzeichnet, dass** die Hydraulikfluid-Versorgungsleitung (12, 12') an einem ihrer Enden mit dem Axialende des Innenbereichs (20, 20') der Verbindungsmanschette (15, 15') verbunden ist, sodass sie von der im Inneren des Rohrs (5, 5') befestigten Verbindungsmanschette (15, 15') durch einfaches Ziehen an der Druckfluid-Versorgungsleitung (12, 12') getrennt werden kann.

15. Einsatz eines Verfahrens nach einem der Ansprüche 1 bis 4 oder der Vorrichtung nach einem der Ansprüche 5 bis 14 zum Herausziehen eines Abschnitts eines Rohrs (5, 5') aus der Rohrplatte (3) eines Druckwasser-Dampferzeugers durch das Innere eines Wasserkastens (2), in den die Enden der Rohre (5, 5') des Dampferzeugers münden, an einer Eingangsseite (3a) der Rohrplatte (3).

16. Einsatz nach Anspruch 15, **dadurch gekennzeichnet, dass** das Rohr (5, 5') in einem Randbereich der Rohrplatte (3) in den Wasserkasten (2) mündet.
